# FASCICULE DE BREVET EUROPEEN

(11) **EP 3 077 240 B1**
(45) Date de publication et mention de la délivrance du brevet: **15.11.2017**
(21) Numéro de dépôt: 14809939.3
(22) Date de dépôt: 17.11.2014
(51) Int. Cl.: B60K 6/48, B60W 10/04, F02N 11/08

(54) **PROCEDE DE COMMANDE DU DEMARRAGE DU MOTEUR THERMIQUE D'UN GROUPE MOTOPROPULSEUR HYBRIDE**
VEFAHREN ZUM STEUERN DES STARTENS VOM VERBRENNUNGSMOTOR EINES HYBRID ANTRIEBSSTRANGS
METHOD FOR STARTING THE ENGINE OF A HYBRID POWERTRAIN

(30) Priorité: 02.12.2013 FR 1361915
(43) Date de publication de la demande: 12.10.2016
(73) Titulaire: Renault S.A.S., 92100 Boulogne-Billancourt (FR)
(72) Inventeur: VESPASIEN, Jean-Marie, F-94600 Choisy-le-Roi (FR); DEBERT, Maxime, F-78000 Versailles (FR); KETFI-CHERIF, Ahmed, F-78990 Elancourt (FR)
(86) Numéro de dépôt international: PCT/FR2014/052940
(87) Numéro de publication internationale: WO 2015/082794

(56) Documents cités:
- EP-A2- 2 557 010
- US-A1- 2011 320 076
- US-B1- 6 342 027

## Description

La présente invention se rapporte au domaine des transmissions hybrides pour véhicule automobile muni d'un moteur thermique et d'une machine électrique d'entraînement.

Elle a pour objet un procédé de commande du démarrage à l'arrêt du moteur thermique d'un groupe motopropulseur hybride comportant un moteur thermique et une machine électrique d'entraînement, deux arbres primaires concentriques couplés respectivement au moteur thermique et à la machine électrique portant chacun au moins un pignon de descente sur un arbre secondaire lié aux roues du véhicule, et un moyen de couplage des deux arbres primaires.

Cette invention trouve une application non limitative sur une transmission hybride, telle que décrite dans la publication WO 2012/131259, comportant deux arbres primaires concentriques (1, 6) portant chacun au moins un pignon de descente sur un arbre secondaire relié aux roues du véhicule, dans laquelle un premier moyen de couplage entre les deux arbres primaires peut occuper trois positions dans lesquelles :
- le moteur thermique est découplé de la chaîne cinématique reliant la machine électrique aux roues,
- le moteur thermique entraîne les roues indépendamment de la machine électrique,
- le moteur thermique et la machine électrique sont couplés de manière à additionner en direction des roues leurs couples respectifs.

Dans cette transmission, il y a également trois positions pour relier directement l'arbre primaire lié au moteur électrique et l'arbre secondaire :
- le moteur électrique n'est pas directement couplé au secondaire,
- le moteur électrique est directement lié au secondaire avec un premier rapport, et
- le moteur électrique est directement lié au secondaire avec un deuxième rapport.

Lors de l'utilisation courante d'un véhicule équipé d'un tel groupe motopropulseur, le conducteur du véhicule peut être amené à activer un mode hybride nécessitant le démarrage du moteur thermique, à l'arrêt ou en déplacement.

L'analyse des émissions polluantes, met en évidence le fait suivant : à chaque premier démarrage du moteur thermique, le pot catalytique n'étant pas encore amorcé, les émissions polluantes sont telles, qu'elles peuvent mettre en péril le respect des normes de dépollution sur l'ensemble du cycle d'homologation.

La publication US 6 342 027, décrit une transmission hybride comportant deux arbres primaires concentriques reliés respectivement à un moteur thermique et à une machine électrique, et un moyen de couplage des deux arbres primaires. Pour démarrer le moteur thermique, les deux arbres primaires sont couplés, l'injection de carburant est inhibée, et le moteur thermique est lancé par la machine électrique sans injection de carburant. Enfin le carburant est injecté, et la machine électrique est coupée.

Toutefois, dans cette publication, chaque arbre primaire n'est pas couplé individuellement sur un arbre secondaire. De plus, lorsque le moteur thermique est démarré, la machine électrique reste couplée à celui-ci.

La présente invention vise à remédier à cet inconvénient en réduisant les émissions polluantes liées au démarrage du moteur thermique, notamment lorsque son pot catalytique n'est pas encore amorcé, de lanière à préparer la transmission du véhicule à un mode de fonctionnement ne nécessitant pas d'interaction de la machine électrique avec le moteur thermique après le démarrage de celui-ci.

Dans ce but, elle propose que le démarrage du moteur thermique comporte les étapes suivante :
- couplage des deux arbres primaires,
- inhibition de l'injection de carburant du moteur thermique,
- lancement du moteur thermique par la machine électrique,
- synchronisation en régime du moteur thermique et de la machine électrique,
- activation de l'injection de carburant,
- coupure de la machine électrique et découplage des deux arbres primaires.

Conformément à l'invention, le moteur thermique et la machine électrique peuvent être synchronisés sur le régime de ralenti du moteur thermique, ou sur un régime supérieur à celui-ci.

D'autres caractéristiques et avantages de la présente invention seront mieux compris à la lecture de la description suivante d'un mode de réalisation non limitatif de celle-ci, en se reportant aux dessins annexés, sur desquels :
- la figure 1 est un schéma de transmission hybride pour la mise en oeuvre de l'invention,
- la figure 2, illustre les différentes phases du démarrage d'un moteur thermique avec son démarreur, et
- la figure 3 est un logigramme de la séquence de démarrage proposée par l'invention.

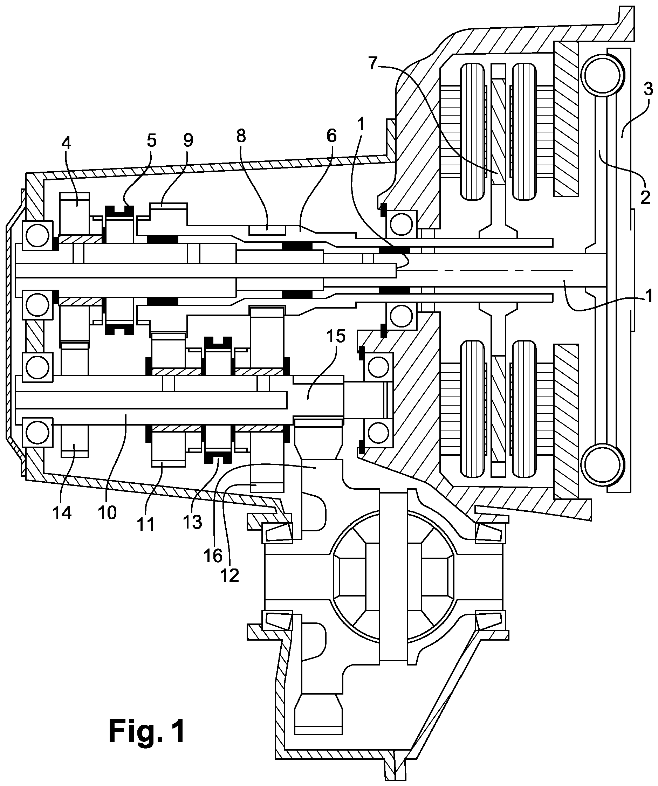

Le groupe motopropulseur (GMP) hybride de la figure 1 comporte un moteur thermique 3, dont on n'a représenté que le volant d'inertie 2, une machine électrique d'entraînement 7, et deux arbres primaires concentriques 1, 6 couplés respectivement au moteur thermique 3 et à la machine électrique 7. Chaque arbre primaire 1, 6 porte au moins un pignon de descente 4 et 8, 9 sur un arbre secondaire 10 relié aux roues du véhicule. La transmission est munie d'un premier moyen de couplage 5 entre les deux arbres primaires 1, 6. Le pignon primaire 4 est un pignon fou de l'arbre plein 1, et les deux pignons primaires 8 et 9 sont des pignons fixes de l'arbre creux 6. Les deux pignons secondaires 11 et 12 sont des pignons fous, tandis que le pignon secondaire 14 est un pignon fixe. Un deuxième moyen de couplage 13, permet de solidariser l'un ou l'autre des deux pignons 8, 9 avec l'arbre secondaire 10. Les références 15 et 16 désignent respectivement le pignon de descente de la transmission 15 sur son différentiel 16.

Le premier moyen de couplage 5 entre les deux arbres primaires 1, 6, peut occuper trois positions dans lesquelles :
- le moteur thermique 3 est découplé de la chaîne cinématique reliant la machine électrique 7 aux roues,
- le moteur thermique 3 entraîne les roues indépendamment de la machine électrique 7, et
- le moteur thermique 3 et la machine électrique 7 sont couplés de manière à additionner en direction des roues leurs couples respectifs.

Le deuxième moyen de couplage 13 peut également occuper trois positions, dans lesquelles :
- la machine électrique 7 n'est pas directement couplée à l'arbre secondaire 10,
- le moteur électrique est directement lié à l'arbre secondaire 10 sur un premier rapport par le pignon 12, et
- le moteur électrique est directement lié à l'arbre secondaire sur un deuxième rapport par le pignon 11.

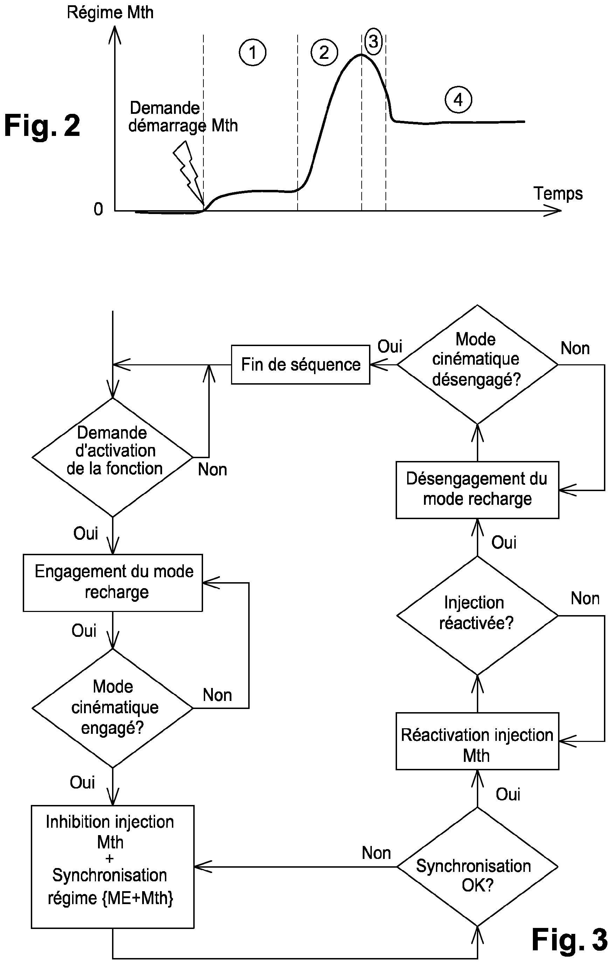

Lorsque le démarrage du moteur thermique s'effectue à l'aide d'un démarreur conventionnel, l'analyse fine des émissions polluantes met en évidence le fait qu'une injection de carburant conséquente est nécessaire pour permettre au moteur thermique de passer du régime maximum du démarreur à un régime, lui permettant ensuite d'être autonome en régulation de ralenti. La figure 2 illustre les différentes phases d'un démarrage de moteur thermique :
- phase 1 : mise sous démarreur du moteur,
- phase 2 : injection de carburant pour permettre sa montée en régime,
- phase 3 : coupure d'injection pour converger vers le régime cible de ralenti,
- phase 4 : activation de la régulation du ralenti (réactivation de l'injection).

Les véhicules sont aujourd'hui tous équipés de pots catalytiques, réduisant les émissions polluantes en fonctionnement normal. Toutefois, comme indiqué plus haut, les émissions polluantes sont particulièrement importantes à chaque premier démarrage du moteur thermique, car le pot catalytique n'est pas encore amorcé. C'est précisément au cours de la phase 2 que le moteur libère des résidus de combustion imbrûlés, car le catalyseur n'est pas encore amorcé.

L'invention propose de réaliser les phases 1 et 2 du démarrage du moteur thermique différemment de la figure 2, par un pilotage particulier, permettant de réduire les émissions de polluants, notamment lors des démarrages à froid. Au lieu d'utiliser un démarreur distinct de la machine électrique d'entraînement, il est prévu au contraire de renoncer à celui-ci, et de lancer le moteur thermique avec la machine électrique. La séquence de démarrage comporte dans ces conditions les étapes suivante :
- couplage des deux arbres primaires,
- inhibition de l'injection de carburant du moteur thermique,
- lancement du moteur thermique par la machine électrique,
- synchronisation en régime du moteur thermique et de la machine électrique,
- activation de l'injection de carburant,
- coupure de la machine électrique et découplage des deux arbres primaires.

La séquence proposée convient particulièrement pour l'engagement du mode particulier de « recharge à l'arrêt » consistant faire tourner la machine électrique en générateur par le moteur thermique pour recharger la batterie lorsque le véhicule est arrêté. La séquence correspondante est illustrée par la figure 3. Suite à une demande d'activation par le conducteur lui-même, ou par une logique de sauvegarde d'autonomie du GMP, l'inhibition de l'injection du moteur thermique et la synchronisation des régimes sont imposées dès que le mode cinématique de recharge est établi. Sur la boîte de la figure 1, le premier coupleur 5 lie alors les deux arbres primaires en rotation (déplacement à droite par rapport à la figure) et le deuxième coupleur 13 est ouvert (position représentée). Le moteur thermique et la machine électrique peuvent être synchronisés sur le régime de ralenti du moteur thermique, ou sur un régime supérieur à celui-ci. Lorsque la synchronisation est OK, l'injection est réactivée. La séquence se termine lorsque le mode cinématique est désengagé. De préférence, l'inhibition de l'injection et la synchronisation en régime sont simultanées. Enfin, il est avantageux que le débit de carburant injecté soit porté directement à son débit de ralenti, sans pic intermédiaire de lancement.

La séquence de la figure 3 est particulièrement adaptée pour recharger les batteries du véhicule à l'arrêt sur le GMP de la figure 1. Toutefois, si le lancement du moteur thermique en roulage est autorisé, l'intervention peut s'étendre à d'autres situations. Sans sortir du cadre de l'invention, elle peut convenir pour l'introduction de modes de recharge de batterie en roulage, (bien qu'elle s'accompagne alors d'une rupture de motricité transitoire qui peut être ressentie désagréablement à l'intérieur du véhicule), où pour passer de modes de roulage purement électriques sur des modes hybrides, où le moteur thermique doit être démarré pour cumuler son apport de puissance avec celui de la machine électrique.

En conclusion, il faut noter que la solution proposée ne nécessite aucun appareil spécifique, et requiert simplement le pilotage particulier du GMP hybride pour démarrer le moteur thermique. Ses bénéfices sont multiples :
- sur la dépollution : réduction des émissions polluantes, car la montée en régime du moteur thermique s'effectue sans combustion de carburant,
- sur l'acoustique, car le démarreur du moteur thermique n'est pas sollicité, et
- sur l'agrément : en sollicitant la machine électrique de traction pour assurer le démarrage du moteur thermique, le temps de démarrage est réduit, car les performances de la machine électrique d'entraînement sont supérieures à celles d'un démarreur.

L'intérêt premier de la solution est donc de permettre un premier démarrage à l'arrêt du moteur thermique, en particulier pour l'activation d'une recharge de la batterie à l'arrêt. En effet, une fois le pot catalytique amorcé, les démarrages suivants (sous démarreur) sont correctement dépollués. Son utilisation pour tout premier démarrage du moteur thermique sur un cycle de roulage, peut donc aussi être retenue, en dehors du mode de recharge de batterie, par exemple pour engager un mode hybride. Etant plus silencieux, plus rapide, et moins polluant que le démarrage classique avec le démarreur, le mode de démarrage proposé peut cependant être utilisé après le premier démarrage, notamment lorsque le véhicule est arrêté, en application de stratégies particulières, telles que :
- une stratégie de mise en action du catalyseur consistant à faire chauffer le catalyseur de façon à l'amorcer, pour qu'il soit en mesure d'assurer sa fonction de dépollution, ou
- une stratégie de préservation du niveau de charge de la batterie, lorsque celui-ci devient critique.

## Revendications

1. Procédé de commande du démarrage du moteur thermique (3) d'un groupe motopropulseur hybride comportant un moteur thermique (3) et une machine électrique d'entraînement (7), deux arbres primaires concentriques (1, 6) couplés respectivement au moteur thermique (3) et à la machine électrique (7), au moins un pignon de descente (8, 9) de chaque arbre primaire (1, 6) sur un arbre secondaire (10) lié aux roues du véhicule, et un moyen de couplage (5) des deux arbres primaires (1, 6), **caractérisé en ce qu'**il comporte les étapes suivante :
- couplage des deux arbres primaires,
- inhibition de l'injection de carburant du moteur thermique,
- lancement du moteur thermique par la machine électrique,
- synchronisation en régime du moteur thermique et de la machine électrique sans injection de carburant,
- activation de l'injection de carburant,
- coupure de la machine électrique et découplage des deux arbres primaires.

2. Procédé de commande selon la revendication 1, **caractérisé en ce que** le moteur thermique (3) et la machine électrique (7) sont synchronisés sur le régime de ralenti du moteur thermique.

3. Procédé de commande selon la revendication 1, **caractérisé en ce que** le moteur thermique (3) et la machine électrique (7) sont synchronisés sur un régime supérieur au régime de ralenti du moteur thermique.

4. Procédé de commande selon la revendication 1, 2 ou 3, **caractérisé en ce que** de l'injection de carburant est inhibée simultanément à la synchronisation.

5. Procédé de commande selon l'une des revendications précédentes, **caractérisé en ce que** le débit de carburant injecté est porté directement à son débit de ralenti sans pic intermédiaire de lancement.

6. Procédé de commande selon l'une des revendications précédentes, **caractérisé en ce qu'**il intervient lorsqu'un mode cinématique de recharge à l'arrêt des batteries du véhicule est activé, dans lequel le moteur thermique (3) fait tourner la machine électrique d'entraînement(7) en générateur.

7. Procédé de commande selon la revendication 6, **caractérisé en ce que** le mode cinématique de recharge de batterie est engagé lorsque le coupleur (5) lie les deux arbres primaires (1, 6).

8. Procédé de commande selon la revendication 6 ou 7, **caractérisé en ce que** le mode de recharge de batterie est un mode de recharge à l'arrêt.

9. Procédé de commande selon l'une des revendications 1 à 5, **caractérisé en ce qu'**il intervient pour passer de modes de roulage purement électriques sur des modes hybrides nécessitant le démarrage du moteur thermique (3) pour cumuler son apport de puissance celui de la machine électrique (7).

10. Procédé de commande selon l'une des revendications 6 à 9, **caractérisé en ce qu'**il est réservé à au premier démarrage du moteur thermique (3) lors d'un cycle de roulage.

## Patentansprüche

1. Verfahren zum Steuern des Startens des Verbrennungsmotors (3) eines Hybridantriebsstranges, der einen Verbrennungsmotor (3) und eine elektrische Antriebsmaschine (7), zwei konzentrische Primärwellen (1, 6), die mit dem Verbrennungsmotors (3) bzw. mit der elektrischen Maschine (7) gekoppelt sind, wenigstens ein Ritzel zur Untersetzung (8, 9) von jeder Primärwelle (1, 6) auf eine Sekundärwelle (10), die mit den Rädern des Fahrzeugs verbunden ist, und ein Mittel zur Kopplung (5) der beiden Antriebswellen (1, 6) umfasst, **dadurch gekennzeichnet, dass** es die folgenden Schritte umfasst:
- Kopplung der beiden Primärwellen,
- Hemmung der Einspritzung von Kraftstoff des Verbrennungsmotors,
- Anlassen des Verbrennungsmotors durch die elektrische Maschine,
- Synchronisation der Drehzahlen des Verbrennungsmotors und der elektrischen Maschine ohne Einspritzung von Kraftstoff,
- Aktivierung der Einspritzung von Kraftstoff,
- Abschaltung der elektrischen Maschine und Entkopplung der beiden Primärwellen.

2. Verfahren zum Steuern nach Anspruch 1, **dadurch gekennzeichnet, dass** der Verbrennungsmotor (3) und die elektrische Maschine (7) bei der Leerlaufdrehzahl des Verbrennungsmotors synchronisiert werden.

3. Verfahren zum Steuern nach Anspruch 1, **dadurch gekennzeichnet, dass** der Verbrennungsmotor (3) und die elektrische Maschine (7) bei einer Drehzahl synchronisiert werden, die höher als die Leerlaufdrehzahl des Verbrennungsmotors ist.

4. Verfahren zum Steuern nach Anspruch 1, 2 oder 3, **dadurch gekennzeichnet, dass** Hemmung der Einspritzung von Kraftstoff gleichzeitig mit der Synchronisation erfolgt.

5. Verfahren zum Steuern nach einem der vorhergehenden Ansprüche, **dadurch gekennzeichnet, dass** der Durchsatz von eingespritztem Kraftstoff direkt auf dessen Leerlaufdurchsatz eingestellt wird, ohne dazwischen liegenden Spitzenwert beim Anlassen.

6. Verfahren zum Steuern nach einem der vorhergehenden Ansprüche, **dadurch gekennzeichnet, dass** es ausgeführt wird, wenn eine kinematische Betriebsart der Wiederaufladung der Batterien des Fahrzeugs im Stillstand aktiviert ist, in welcher der Verbrennungsmotor (3) die elektrische Antriebsmaschine (7) im Generatorbetrieb laufen lässt.

7. Verfahren zum Steuern nach Anspruch 6, **dadurch gekennzeichnet, dass** die kinematische Betriebsart der Wiederaufladung der Batterie eingeschaltet wird, wenn die Kopplungsvorrichtung (5) die beiden Primärwellen (1, 6) verbindet.

8. Verfahren zum Steuern nach Anspruch 6 oder 7, **dadurch gekennzeichnet, dass** die Betriebsart der Wiederaufladung der Batterie eine Betriebsart der Wiederaufladung im Stillstand ist.

9. Verfahren zum Steuern nach einem der Ansprüche 1 bis 5, **dadurch gekennzeichnet, dass** es ausgeführt wird, um von rein elektrischen Fahrweisen zu hybriden Fahrweise überzugehen, die das Starten des Verbrennungsmotors (3) erfordern, um seinen Beitrag an Leistung demjenigen der elektrischen Maschine (7) hinzuzufügen.

10. Verfahren zum Steuern nach einem der Ansprüche 6 bis 9, **dadurch gekennzeichnet, dass** es für für das erstmalige Starten des Verbrennungsmotors (3) während eines Fahrzyklus reserviert ist.

## Claims

1. Method for controlling the startup of the heat engine (3) of a hybrid power train comprising a heat engine (3) and an electric drive machine (7), two concentric main shafts (1, 6) coupled one to the heat engine (3) and one to the electric machine (7), at least one step-down gear (8, 9) of each main shaft (1, 6) on a secondary shaft (10) connected to the wheels of the vehicle, and a means (5) for coupling the two main shafts (1, 6), **characterized in that** said method comprises the following steps:
- coupling the two main shafts,
- inhibiting the fuel injection of the heat engine,
- launching the heat engine by means of the electric machine,
- synchronizing the speed of the heat engine and of the electric machine without fuel injection,
- activating the fuel injection,
- turning off the electric machine and decoupling the two main shafts.

2. Control method according to Claim 1, **characterized in that** the heat engine (3) and the electric machine (7) are synchronized at the idle speed of the heat engine.

3. Control method according to Claim 1, **characterized in that** the heat engine (3) and the electric machine (7) are synchronized at a speed greater than the idle speed of the heat engine.

4. Control method according to Claim 1, 2 or 3, **characterized in that** the fuel injection is inhibited simultaneously with the synchronization.

5. Control method according to any one of the preceding claims, **characterized in that** the flow of injected fuel is brought directly to its idle flow rate with no intermediate starting peak.

6. Control method according to any one of the preceding claims, **characterized in that** it intervenes when a kinematic recharging mode at standstill of the batteries of the vehicle is activated, in which the heat engine (3) turns the electric drive machine (7) into a generator.

7. Control method according to claim 6, **characterized in that** the kinematic battery recharging mode is engaged when the coupler (5) connects the two main shafts (1, 6).

8. Control method according to Claim 6 or 7, **characterized in that** the battery recharging mode is a recharging mode at standstill.

9. Control method according to any one of Claims 1 to 5, **characterized in that** it intervenes to pass from purely electric driving modes into hybrid modes requiring the startup of the heat engine (3) in order to add the power contribution thereof that of the electric machine (7) .

10. Control method according to any one of Claims 6 to 9, **characterized in that** it is reserved for for the initial startup of the heat engine (3) during a driving cycle.
